# EUROPEAN PATENT APPLICATION

(11) **EP 3 424 789 A2**
(43) Date of publication of application: **09.01.2019**
(21) Application number: 17760311.5
(22) Date of filing: 02.03.2017
(51) Int. Cl.: B60T 13/74, B60T 7/10, B60T 8/17, B60T 11/04, B60R 16/03, B60R 16/033, B60T 17/18, B60T 8/88, F16D 65/00, H02P 29/024

(54) **SYSTEM FOR CONTROLLING POSITIONS OF EPB CALIPER AND CABLE BY USING DRIVING CURRENT AND RIPPLE**

(30) Priority: 02.03.2016 KR 20160025090
(71) Applicant: erae AMS Co., Ltd., Daegu 42981 (KR)
(72) Inventor: KANG, Shin Deok, Dalseong-gun Daegu 42981 (KR); NOH, Seung Soo, Dalseong-gun Daegu 42981 (KR); AHN, Dae Ki, Dalseong-gun Daegu 42981 (KR); KIM, Dae Kyung, Dalseong-gun Daegu 42981 (KR)
(74) Representative: Caspary, Karsten
(86) International application number: PCT/KR2017/002252
(87) International publication number: WO 2017/150907

(57) **Abstract**

The present invention relates to an invention relates to a system for controlling the positions of a caliper and a cable of an electric parking brake (EPB). According to an embodiment of the present invention, a system for controlling the positions of a caliper and a cable of an EPB comprises: an actuator driving motor used for engaging and disengaging a parking brake of an EPB system; an electronic control module for controlling the motor; and a vehicle battery for supplying power to the motor and the electronic control module, wherein the electronic control module includes a ripple measuring unit for measuring the ripple of the motor by receiving an output signal of the motor and a current measuring unit for measuring a change in the driving current of the motor.

## Description

### Technical Field

The present invention relates to a system for controlling the positions of a caliper and a cable of an electric parking brake (EPB).

### Background Art

A parking brake of an automobile serves to brake rear wheels and/or front wheels of an automobile in order to maintain the state in which the automobile is stopped/parked. The parking brake is to prevent a vehicle from being unintentionally moved and functions in a manner whereby force is applied to the parking cable when a driver pulls the brake lever and the applied force is evenly distributed to the brake mechanism mounted on the wheel through the equalizer to cause the brake mechanism to restrain the wheel.

An electric parking brake (EPB) is a brake system used as a substitute for a mechanical handle lever (side brake) or a foot pedal among parking brakes, in which the parking brake is enabled using simple button operation and motor power. In particular, the EPB can be linked to an automatic vehicle hold (AVH) (hereinafter referred to as "Auto Hold") which is provided to relieve fatigue caused due to increasing depressions of the foot pedal by a driver when a vehicle movement stagnates in an urban area. Even when the driver wants to start the vehicle again after stopping on a ramp, the vehicle does not move backward, thereby improving safety and convenience of the driver. In addition, it has an advantage of giving a great benefit to drivers who lack power, quick reflexes, and attention.

In a typical EPB application, a separate actuator equipped with a motor is used to restrict movement of a wheel, thereby performing a control operation of a parking brake. A caliper type or a cable puller type EPB is mainly used as means for restricting the movement of the wheel.

In order to control the position of the caliper or the cable and provide an appropriate braking force to the wheel, a magnet is generally disposed inside the actuator and a linear Hall sensor is equipped to measure a change in magnetic field from the magnet. Here, the linear Hall sensor measures a change in the magnetic field and thus measures the parking brake tension generated in the actuator by driving the motor, whereby the parking braking force is controlled by using the measured brake tension.

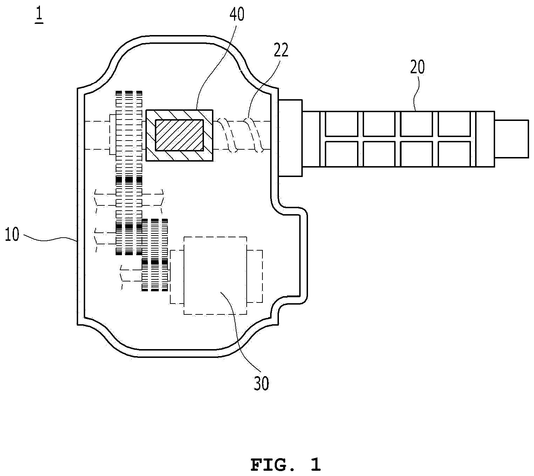

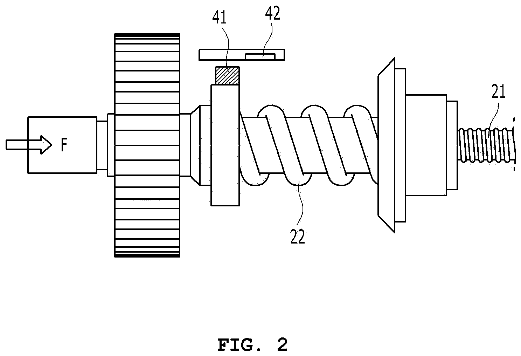

FIG. 1 is a view showing an example of an EPB assembly. FIG. 2 is a view showing a device for detecting the number of rotations of the motor according to the driving of an actuator of an EPB assembly according to the conventional art.

The EPB assembly 1 may include, for example, a housing 10, a gear box (not shown), an actuator 20, a motor 30, an EPB electronic control module 40, and the like. In particular, the actuator shown in FIGS. 1 and 2 is a cable puller type actuator, and has a spring 22 and a thread 21 formed on a gear train and an actuator rotating shaft respectively, as one embodiment.

The parking brake tension detection system of the conventional art shown in FIG. 2 additionally includes a magnet 41 and a linear Hall sensor assembly 42 for sensing the number of rotations of an actuator or a motor. The material cost increases due to the addition of the magnet 41 and the linear Hall sensor assembly 42, and a magnetic body of the magnet 41 must have an optimized design to sensitively sense a change in the magnetic field, which results in increasing complexity of design.

In addition, if the magnetism is lost due to the characteristics of the magnet, the magnet cannot play the role of the sensor itself, which results in a phenomenon called brake drag, whereby there is a problem that accurate position control becomes impossible. In order to solve this problem, some EPB manufacturers select two types of magnets, one for linear motion regardless of the actuator rotation and the other for the same rotation as the actuator rotation, in which the linear motion and the rotation are measured by each Hall sensor so that force acting on the actuator and the number of rotations of the actuator are measured at the same time, thereby increasing reliability of the product. However, though reliability of the product can be increased in such a case, the material cost is further increased and the configuration of the EPB assembly is further complicated, whereby complexity of the apparatus design is increased.

In addition, according to such conventional device for controlling the positions of the caliper of the EPB having complicated configuration, there is also a risk that the driving of the motor or the actuator is not performed due to a subtle positional fluctuation caused by continuous use of the EPB, overheating of the motor, a sticking phenomenon due to foreign matter penetration into the actuator or abrasion phenomenon, and the like.

### Disclosure

### Technical Problem

Accordingly, the present invention has been made keeping in mind the above problems occurring in the prior art, and an object of the present invention is to provide a system for controlling the positions of a caliper and a cable of an EPB without providing a magnet and a hall sensor separately.

As a more specific embodiment, there is provided a system for controlling an EPB applying operation and an EPB releasing operation by knowing the positions of a caliper and a cable of an EPB using a current measuring device and a speed measuring device of the present invention.

### Technical Solution

According to an embodiment of the present invention, there is provided a system for controlling positions of a caliper and a cable of an electric parking brake (EPB), the system including: an actuator driving motor 30 used for engaging and disengaging a parking brake of an EPB system; an electronic control module 40 for controlling the motor; and a vehicle battery 50 for supplying power to the motor and the electronic control module, wherein the electronic control module 40 includes a current measuring unit 100 for measuring a change in driving current of the motor and a ripple measuring unit 200 for measuring a ripple of the motor by receiving an output signal of the motor.

According to an embodiment, the output signal of the motor may be output as any one form of a current or a voltage.

According to an embodiment, the system may include an EPB applying logic block 110 and an EPB releasing logic block 210.

Herein, the system may include an EPB protection logic block 300.

According to another embodiment of the present invention, there is provided a method of controlling the positions of the caliper and the cable of the EPB, in a case of an EPB applying mode, the method including: measuring a change in the driving current of the motor; comparing the measured current value with a preset current value; and stopping the EPB applying when the measured current value exceeds the preset current value.

In the EPB applying mode, the method further may include monitoring an amount of rotation of an EPB driving motor to prevent overspeed or false operation,

According to another embodiment of the present invention, there is provided a method of controlling the positions of the caliper and the cable of the EPB, in a case of an EPB releasing mode, the method including: measuring an amount of rotation of the motor; determining whether an EPB releasing condition is satisfied using the measured amount of rotation of the motor; and releasing the EPB driving motor when the EPB releasing condition is satisfied.

Herein, in the EPB releasing mode, the method may further include using an amount of time on a current profile of the EPB driving motor to prevent overspeed or false operation.

### Advantageous Effects

According to an embodiment of the present invention, the number of rotations of the EPB motor can be precisely measured without using a magnet or a linear Hall sensor when the EPB motor is used.

Further, since the magnet and the linear Hall sensor are not provided, the weight of the EPB actuator can be reduced, the actuator can be designed easily, and the cost of the product can be reduced.

Using the system according to an embodiment of the present invention, the positions of the caliper and the cable of the EPB can be precisely controlled.

In addition, by providing the EPB protection logic, there is an advantage that stability is added to the driving of the EPB system.

### Description of Drawings

FIG. 1 is a view showing an EPB assembly.
FIG. 2 is a view showing a device for detecting the number of rotations of the motor according to the driving of an actuator of an EPB assembly according to the conventional art.
FIG. 3 is a schematic diagram illustrating a configuration of a system for controlling the positions of a caliper and a cable of an EPB according to an embodiment of the present invention.
FIG. 4 is a control flowchart illustrating a system for controlling the positions of a caliper and a cable of an EPB according to an embodiment of the present invention.
FIG. 5 is a block diagram of an EPB applying logic according to an embodiment of the invention.
FIG. 6 is a block diagram of an EPB releasing logic according to an embodiment of the present invention.

### Mode for Invention

The embodiments described below are provided so that those skilled in the art can easily understand the technical idea of the present invention, and thus the present invention is not limited thereto. In addition, the matters described in the attached drawings may be different from those actually implemented by schematized drawings to easily describe embodiments of the present invention.

It is to be understood that when an element is referred to as being connected or connected to another element, it may be directly connected or connected to the other element, and other elements may be also present in between.

The term "connection" as used herein means a direct connection or an indirect connection between a member and another member, and may refer to all physical connections such as adhesion, attachment, fastening, bonding, and coupling.

The singular forms include plural forms unless the context clearly dictates otherwise. It is to be understood that the words "comprising" or "having", etc. mean that features, numbers, steps, operations, elements, parts, or combinations thereof are present, and one or more features or numbers, steps, operations, elements, parts, or combinations thereof may be added.

Prior to the description of the drawings, the same constituent elements as in the conventional art will be described using the same reference numerals.

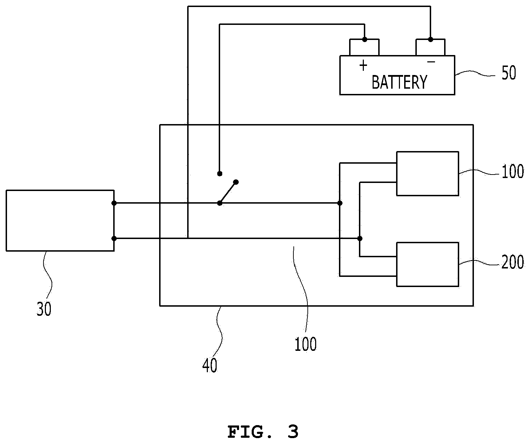

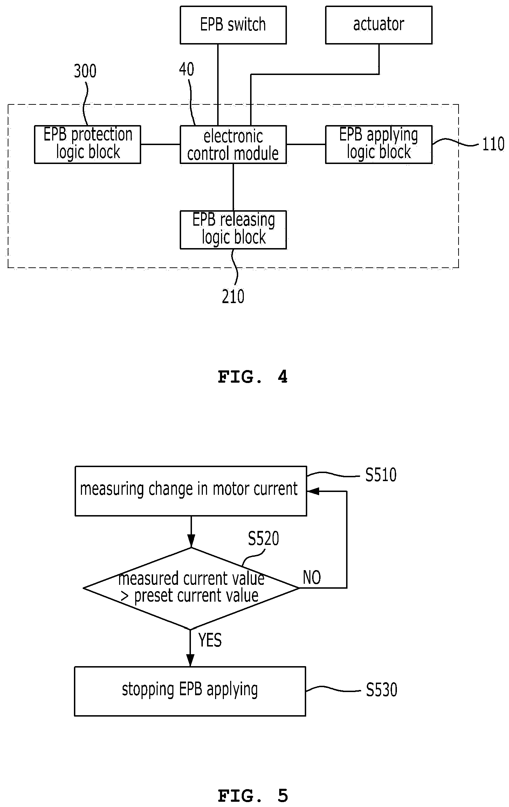

Hereinafter, a system for controlling the positions of a caliper and cable of an EPB according to an embodiment of the present invention will be described with reference to FIGS. 3 and 4.

First, a configuration of the system of the present invention will be described. FIG. 3 is a schematic diagram showing a configuration of a system for measuring an EPB motor drive current and the number of rotations of the EPB motor according to an embodiment of the present invention.

As shown in FIG. 3, main constituent elements of the system of the present invention may include an actuator driving motor 30 used for engaging and disengaging a parking brake of an electric parking brake (EPB) system; an electronic control module 40 for controlling the motor; and a vehicle battery 50 for supplying power to the motor and the electronic control module.

In particular, in the system of the present invention, the electronic control module 40 further includes a current measuring unit 100 for measuring a change in driving current of the motor and a ripple measuring unit 200 for receiving the output signal of the motor and measuring a ripple of the motor.

In order to achieve the object disclosed in the above "Technical Problem", the present invention has a technical solution that the driving of the EPB motor is controlled by an EPB applying operation and an EPB releasing operation using the current measuring unit 100 and the ripple measuring unit 200.

The current measuring unit 100 of the present invention is configured to control the driving of the EPB motor by using a proportional correlation between driving current of the motor and engaging force of the actuator in the EPB applying mode. Generally, when the driving current of the motor is increased, the engaging force of the actuator is increased. Therefore, the engaging force of the actuator is estimated as the driving current of the motor using such characteristics. Furthermore, it is possible to prevent overspeed of the driving motor in the EPB applying mode through the estimated engaging force of the actuator. Specifically, the current measuring unit 100 measures a change in the motor driving current in an EPB applying logic. When the motor current exceeds a specific value (specific target engaging force), the operation of the EPB driving motor may be set to be stopped.

A separate load sensor (for example, linear Hall sensor), conventionally, must be provided to measure the engaging force of the EPB actuator, meanwhile the present invention has the current measuring unit 100 provided in the electronic control module in order to allow currents to be detected at one or both ends of the driving motor, whereby it is possible to effectively estimate the engaging force of the EPB actuator.

The ripple measuring unit 200 of the present invention is configured to control the driving of the EPB motor by using a proportional correlation between the amount of rotation of the driving motor and the engaging force of the actuator in the EPB releasing mode. Herein, the EPB drive control unit controls a release timing of the EPB driving motor, as opposed to controlling an operation stop timing of the EPB driving motor in the EPB current measuring unit 100.

More specifically, when the user applies an EPB releasing switch, the amount of rotation of the driving motor is increased and the engaging of the actuator is released. The amount of rotation of the driving motor is measured with respect to a timing when the engaging of the actuator is released, in which the EPB driving motor is released when a predefined EPB releasing condition is satisfied. For example, the EPB releasing condition may be set when the amount of rotation of the motor is equal to and larger than the amount of rotation of the motor set as an EPB releasing point.

A separate load sensor (for example, a linear Hall sensor), conventionally, must be also provided in the operation of the driving motor for releasing the EPB, whereas the present invention has the ripple measuring unit 200 provided in the electronic control module so that the amount of rotation of the motor may be accurately measured while avoiding danger such as weakening of magnetic field of the magnet, overheating of the motor, fluctuation of the position of the measuring sensor, and the like.

To facilitate understanding, the ripple measuring unit 200 will be further described.

The motor 30, the electronic control module 40, and the vehicle battery 50 may be electrically connected to each other. The motor 30 is driven by receiving power from the vehicle battery. A ripple component of the output signal of the motor 30 is detected, in order to accurately estimating the number of rotations of the motor 30. Further, by estimating the number of rotations of the motor 30, the brake tension may be estimated to control the precise operation of the EPB assembly.

Due to the structural characteristics of the motor 30, a specific ripple exists in an output waveform of the motor 30, in which only the ripple signal is extracted by the ripple measuring unit 200.

The ripple measuring unit 200 may include, for example, a true RMS to DC converter. The true RMS to DC converter is a circuit element having a transformer or a probe embedded therein, and may be a signal extraction converter that converts waveforms of all types without regard to direct current, alternating current, irregular alternating current, and the like, into effective values. At least one OP-AMP is provided and connected to the true RMS to DC Converter, thereby making it possible to extract pure ripple voltage waveform.

For example, the number of ripples is measured from the extracted ripple signal, and the number of rotations may be estimated using the values (rotor, stator, flange, air gap, and magnitude and shape of a case) in which information for a structure inherent to the motor is reflected. Specifically, the current number of rotations of the driving motor is estimated from a relationship between the information defined by the structure inherent to the motor and the applied ripple signal.

Meanwhile, the output signal of the motor 30 may be either a current or a voltage. Specifically, the ripple of the motor 30 measured by the ripple measuring unit 200 of the present invention may be a ripple component of the drive current or a ripple component of the drive voltage.

The motor 30 and the electronic control module 40 of the present invention may be electrically connected to the vehicle battery 50 to receive power, and the vehicle battery 50 according to an embodiment may be connected to a constant voltage power source (not shown) prepared in the vehicle. Generally, the direct current signal from the battery is rectified and then supplied to other circuit elements (for example, a ripple measuring unit) through the constant voltage power source. The constant voltage power source not shown may be freely disposed anywhere in the vehicle, and may disposed adjacent to the vehicle battery 50, or disposed adjacent to the device for detecting the number of rotations of the motor according to the present invention.

Next, a control flow for the system of the present invention will be described. FIG. 4 is a control flowchart for the system for measuring an EPB motor drive current and the number of rotations of the EPB motor according to an embodiment of the present invention.

Referring to FIG. 4, the present invention has an EPB switch mounted in the vehicle to operate the EPB, and performs an EPB applying operation and an EPB releasing operation by pressing the switch. The user's intention to apply the parking brake force may be directly transmitted to the electronic control module 40 according to the operation of the EPB switch or may be indirectly transmitted to the electronic control module 40 via an ECU separately provided in the vehicle.

More specifically, the EPB switch may be switched in such a way that allows the EPB system to apply the parking brake according to the user's operation, or the EPB system to release the parking brake according to the user's operation, or the EPB system to be in a neutral state according to the case.

The actuator of the present invention may apply the braking force to the parking brake according to the control of the EPB electronic control module 40, that is, restrain the brake disk by using a caliper and a cable.

The EPB applying operation and the EPB releasing operation described above are performed by an EPB applying logic block 110 and an EPB releasing logic block 210 provided in the electronic control module or the ECU separately provided in the vehicle. In addition, the EPB protection logic block 300 may be provided in the electronic control module or ECU of the present invention to improve stability in EPB operation.

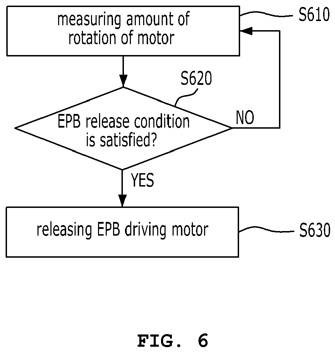

Finally, referring to FIG. 5 and FIG. 6, the EPB applying logic, the EPB releasing logic, and the EPB protection logic will be described.

FIG. 5 is a block diagram of an EPB applying logic according to an embodiment of the invention. FIG. 6 is a block diagram of an EPB releasing logic according to an embodiment of the present invention.

As shown in FIG. 5, a method of controlling the positions of a caliper and a cable of the EPB according to an embodiment of the present invention, in the case of an EPB applying mode, may include measuring a change in the motor driving current (S510); comparing the measured current value with a preset current value (S520); and stopping the EPB applying when the measured current value exceeds a preset current value (S530).

When the measured current value is less than the preset current value, the method is returned back to measure the change in the motor driving current, thereby continuously measuring the motor current value.

When the measured current value exceeds the preset current value, the EPB driving motor is controlled to be stopped, thereby preventing overspeed of the motor.

Further, since the motor protection logic may be included according to an embodiment of the present invention, the amount of rotation of the EPB driving motor may be additionally monitored in the EPB applying mode, thereby preventing overspeed or false operation.

Referring to FIG. 6, a method of controlling the positions of a caliper and a cable of an EPB according to an embodiment of the present invention, in a case of the EPB release mode, includes: measuring an amount of rotation of the motor (S610); determining whether the EPB release condition is satisfied using the measured amount of rotation (S620); and releasing the EPB driving motor when the EPB release condition is satisfied (S630).

When the amount of rotation of the motor is measured and then the EPB release condition is satisfied, the EPB driving motor is released. When the EPB release condition is not satisfied, the method is returned back to measure the amount of rotation of the motor. In this case, the EPB release condition may be set as the same parameter as the amount of rotation of the motor. Specifically, when the amount of rotation of the motor is equal to or greater than the amount of rotation of the motor set by the EPB release point, the EPB driving motor may be released.

Further, the motor protection logic may be included according to one embodiment of the present invention, so that the amount of time on a current profile of the EPB driving motor may be used in the EPB release mode, thereby preventing overspeed and false operation.

While the flowcharts depict operations in the drawings in a particular order, they are shown for the sake of obtaining the most desirable results and should not be construed as necessarily enforcing such operations in the particular order or sequential order shown. That is, the steps disclosed in S510 to S550 may be practiced in such a manner to be freely substituted by those skilled in the art without departing from the scope of the invention.

The specification is not intended to limit the invention to the precise form disclosed. While the present invention has been described in connection with what is presently considered to be practical exemplary embodiments, it is to be understood that the invention is not limited to the disclosed embodiments, but on the contrary, changes and modifications can be made.

The scope of the present invention is defined by the appended claims rather than the detailed description, and all changes or modifications derived from the meaning and range of the claims and their equivalents should be interpreted as being included in the scope of the present invention.

### Industrial Applicability

According to the embodiment of the present invention as described above, the number of rotations of the EPB motor can be precisely measured without using a magnet or a linear Hall sensor when the EPB motor is used.

Further, since the magnet and the linear Hall sensor are not provided, the weight of the EPB actuator can be reduced, the actuator can be designed easily, and the cost of the product can be reduced.

Using the system according to an embodiment of the present invention, the positions of the caliper and the cable of the EPB can be precisely controlled.

In addition, by providing the EPB protection logic, there is an advantage that stability is added to the driving of the EPB system.

Accordingly, the present invention has industrial applicability due to its advantages and various effects compared to the prior art.

## Claims

1. A system for controlling positions of a caliper and a cable of an electric parking brake (EPB), the system comprising:
an actuator driving motor (30) used for engaging and disengaging a parking brake of an EPB system;
an electronic control module (40) for controlling the motor; and
a vehicle battery (50) for supplying power to the motor and the electronic control module, wherein the electronic control module (40) includes a current measuring unit (100) for measuring a change in driving current of the motor and a ripple measuring unit (200) for measuring a ripple of the motor by receiving an output signal of the motor.

2. The system according to claim 1, wherein the output signal of the motor is output as any one form of a current or a voltage.

3. The system according to claim 1, wherein the system includes an EPB applying logic block (110) and an EPB releasing logic block (210).

4. The system according to claim 3, wherein the system includes an EPB protection logic block (300).

5. A method of controlling the positions of the caliper and the cable of the EPB using the system according to any one of claims 1 to 4, in a case of an EPB applying mode, the method comprising:
measuring a change in the driving current of the motor;
comparing the measured current value with a preset current value; and
stopping the EPB applying when the measured current value exceeds the preset current value.

6. The method according to claim 5, further comprising:
monitoring an amount of rotation of an EPB driving motor to prevent overspeed or false operation, in the EPB applying mode.

7. A method of controlling the positions of the caliper and the cable of the EPB using the system according to any one of claims 1 to 4, in a case of an EPB releasing mode, the method comprising:
measuring an amount of rotation of the motor;
determining whether an EPB releasing condition is satisfied using the measured amount of rotation of the motor; and
releasing the EPB driving motor when the EPB releasing condition is satisfied.

8. The method according to claim 7, further comprising:
using an amount of time on a current profile of the EPB driving motor to prevent overspeed or false operation, in the EPB releasing mode.
